**Europäisches Patentamt**

**European Patent Office**

**Office européen des brevets**

(19)

(11) Veröffentlichungsnummer: **0 301 218 B1**

(12) # EUROPÄISCHE PATENTSCHRIFT

(45) Veröffentlichungstag der Patentschrift: **21.11.91**

(21) Anmeldenummer: **88109556.6**

(22) Anmeldetag: **15.06.88**

(51) Int. Cl.⁵: **B23K 11/14**, B23K 11/26, H01H 11/04

(54) Verfahren zum Verbinden von Werkstücken durch Widerstandserwärmung mittels eines Kurzzeit-Energieimpulses.

(30) Priorität: **22.07.87 DE 3724294**

(43) Veröffentlichungstag der Anmeldung:
**01.02.89 Patentblatt 89/05**

(45) Bekanntmachung des Hinweises auf die Patenterteilung:
**21.11.91 Patentblatt 91/47**

(84) Benannte Vertragsstaaten:
**AT BE CH DE FR GB IT LI NL SE**

(56) Entgegenhaltungen:
**FR-A- 1 279 387**

**WELDING AND METAL FABRICATION, Band 42, Nr. 4, April 1974, Seiten 125-130, Haywards Heath, GB; F. FRÜNGEL et al.: "Ultra-pulse welding"**

**AUTOMATIC WELDING, Band 36, Nr. 1, Januar 1983, Seiten 31-35, Cambridge, GB; I.V. PENTEGOV et al.: "Regulating the shape of the current curve for an MS-1 capacitor-discharge machine"**

**FEINWERKTECHNIK UND MESSTECHNIK, Band 91, Nr. 6, September 1983, Seiten 253-265; D. STÖCKEL: "Kontaktschweisstechnik"**

(73) Patentinhaber: **SIEMENS AKTIENGESELL-SCHAFT**
**Wittelsbacherplatz 2**
**W-8000 München 2(DE)**

(72) Erfinder: **Dederer, Günter, Dipl.-Ing. (FH)**
**Wotanstrasse 12**
**W-8034 Germering(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Verbinden von Werkstücken durch Widerstandserwärmung mittels eines Kurzzeit-Energieimpulses, insbesondere beim Widerstandspunktschweißen und/oder beim Widerstandslöten eines Miniaturkontaktes auf einen Träger.

Bei der Herstellung eines Relais werden durch Widerstandsschweißen, auch bekannt als konduktives Schweißen, meist Kontakte aus Edelmetall, z.B. Silber, mit Kontaktträgern verschweißt. Beim Schaltvorgang im Relais kann es zum sogenannten Kaltverschweißen kommen, wenn keine ausreichende Kontakthärte vorhanden ist. Ein wesentliches Kriterium für die Güte eines Verfahrens, welches Kontakte mit Trägern durch Widerstandserwärmung verbindet, ist demnach der Kontakthärteverlust der vorher durch Kaltverformung gehärteten Kontakte durch das Verbindungsverfahren. Um den Kontakthärteverlust gering zu halten, sollte während des Verbindungsvorganges gerade so viel Energie eingebracht werden, das die Verbindungsstelle oder -zone auf die Verfahrenstemperatur erhitzt und die Verbindung hergestellt wird. Jede darüber hinaus eingebrachte Energie führt zu einer für die Werkstoffeigenschaften schädlichen Erwärmung des die Verbindungsstelle umgebenden Materials, was insbesondere im Fall des gehärteten Kontaktes, bzw. dessen Oberfläche, die der Verbindungsstelle gegenüberliegt, zu einer starken Abnahme der Kontakthärte führt.

Um das Prellverhalten der Kontakte klein zu halten wird die Masse der Kontakte immer mehr reduziert. Dies bedeutet, daß vor allem die Höhe der Kontakte immer geringer wird. Dies hat zugleich den Vorteil, daß das genannte Relais in seinen Abmaßen kleiner gestaltet werden kann. Der Trend, Miniaturkontakte mit einer Höhe von weniger als 0,5 mm, mit einer Breite von z.B. 0,8 mm und einer Länge von z.B. 1,4 mm einzusetzen, bringt gleichzeitig das Problem einer für die Silber-Kontaktschicht schädlichen Erwärmung durch den Schweißvorgang mit sich.

Bisherige Kontaktschweißverfahren benötigen zur Einbringung der für die Verbindung notwendigen Energie relativ lange Zeiten. Es sind zwar Energieimpulse mit hohen Stromstärken oder Energieimpulse mit extremer Anstiegs-Steilheit möglich, jedoch keine Kombination aus beidem. Wird ein Energieimpuls mit für die Verbindung gerade ausreichender, aber relativ niedriger Stromstärke eingebracht, so ist grundsätzlich eine lange Impulszeit erforderlich, um die für die Verbindung nötige Energie einzubringen. Derartige Impulszeiten bewirken, daß die an der Verbindungsstelle erzeugte Wärme genügend Zeit hat, durch Wärmeleitung die umliegenden Materialbereiche mit zu erwärmen und zu den genannten Nachteilen führt. Die Bereitstellung eines Energieimpulses mit relativ hoher Stromstärke, aber geringer Anfangssteilheit führt ebenfalls nicht zu ausreichend kurzen Impulszeiten.

In der FR-A-1 279 387 wird ein Verfahren zum Verbinden von Werkstücken durch Widerstandserwärmung mittels eines Energieimpulses beschrieben, wobei dieser Energieimpuls sehr kurz sein soll, einen extrem steilflankigen Anstieg, einen anschließend konstanten Verlauf mit hoher Stromstärke und eine begrenzte Zeitdauer aufweisen soll. Hiermit soll theoretisch eine schnelle und begrenzte Erwärmung des Materials erreicht werden. Eine Regelung des Energieimpulses, insbesondere dessen reproduzierbarer konstanter Verlauf bei hoher Stromstärke wird jedoch nicht beschrieben.

Der Erfindung liegt die Aufgabe zugrunde, die für eine Verbindung von Werkstücken durch Widerstandserwärmung, insbesondere beim Schweißen von abgelängten Miniaturkontakten auf Kontaktfedern, nötige Energie in kürzester Zeit gezielt einzubringen und somit eine Begrenzung der Wärmeeinflußzone, sowie vor allem der Kontakthärteverluste auf ein Minimum zu erreichen.

Diese Aufgabe wird erfindungsgemäß dadurch gelöst, daß das Verfahren mit einem für die Verbindung notwendigen Kurzzeit-Energieimpuls durchgeführt wird, der geregelt ist, so daß er einen extrem steilflankigen Anstieg mit mindestens 10 A/µs, einen anschließenden konstanten Verlauf mit hoher Stromstärke und eine maximale Zeitdauer von 0,8 ms aufweist und die ins Werkstück eingebrachte Leistung für aufeinander folgende Verbindungsvorgänge reproduzierbar eingebracht wird, wobei der für die Regelung notwendige Soll-/Ist-Wert-Vergleich anhand der direkt an den zu verbindenden Teilen anliegenden elektrischen Daten durchgeführt wird.

Durch einen derartigen Kurzzeit-Energieimpuls der die Kombination von steilflankigem Anstieg, anschließendem konstanten Verlauf mit hoher Stromstärke und geringer Impulsdauer aufweist, wird die bei der Verbindung entstehende Wärme im wesentlichen auf die Verbindungszone begrenzt. Das Verfahrensmerkmal der Steilflankigkeit des Anlaufvorganges hat zur Folge, daß die für eine qualitativ gute Verbindung nötige Stromstärke extrem schnell erreicht ist und somit die Zeit, in der die Werkstücke mit niedriger Stromstärke beaufschlagt werden und in der zwar eine Erwärmung des Materials, jedoch keine Verschweißung oder Lötung stattfindet, minimiert wird.

Die anschließend konstante hohe Stromstärke mit konstantem Verlauf sorgt für einen zuverlässigen Verbindungsvorgang, der nach maximal 0,8 ms beendet ist. Die exakte Höhe der Stromstärke ist u.a. von der Länge der Miniaturkontakte abhängig. So wird ein Kontakt mit einer Länge von 1,4 mm z.B. mit 1,5 kA geschweißt und einer mit 2,0 mm Länge mit 2,5 kA. Bei üblichen Längenabmessungen von Miniaturkontakten ist eine Stromstärke von mindestens 1,0 kA nötig. Die während dieser Impulszeit eingebrachte Energie ist zum Beispiel beim Schweißen oder Löten von Miniaturkontakten vollkommen ausreichend und eine unnötige Erwärmung der Werkstücke durch Wärmeleitung über die Verbindungszone hinaus findet durch die kurze Verfahrenszeit nicht statt. Durch die wesentliche Erkenntnis, daß eine Erhöhung der Stromstärke um ca. 5 bis 7 % die notwendige Impulsdauer auf ca. 30 % entsprechend 0,8 ms, verringert, wird eine Einsparung an Schweiß- oder Lötenergie nachgewiesen.

Ein weiterer Vorteil dieses Verfahrens ist die Steigerung der Elektrodenstandmenge auf das drei- bis fünffache. Der größte Vorteil liegt jedoch darin, daß die Kontakthärteverluste der vorher gehärteten Silber-Miniaturkontakte durch das Verfahren sich auf weniger als 25 % beziffern. Dies wird insbesondere dadurch erreicht, daß der Kurzzeit-Energieimpuls geregelt ist. Darunter ist zu verstehen, daß die elektrischen Daten im Sekundärkreis an den Elektroden, die mit den zu verbindenden Werkstücken in Kontakt stehen, durch Messung des Stromes, der Spannung und Errechnung der Leistung als Istwert aufgenommen und einem Regler zum Soll-/Istwertvergleich zugeführt werden. Die Sollwertkurve kann entweder nach der Spannung oder nach dem Strom oder nach der Leistung vorgegeben werden.

In Bezug auf den Zusatzwerkstoff für die Verbindung ist in einer besonders vorteilhaften Ausgestaltung vorgesehen, daß der Trägerwerkstoff als Schweißhilfe eingesetzt wird. Diese Schweißhilfe ist in bekannter Weise meist durch ein Plattierungsverfahren auf das Kontaktmaterial aufgebracht worden und weist zentral einen sogenannten Schweißbuckel auf. Während der Verschweißung verbindet sich die Schweißhilfe mit dem Kontaktträger. Bei Verwendung einer solchen Schweißhilfe, die z.B. aus dem Werkstoff CuNi 30 Fe bestehen kann, liegt die Verfahrenstemperatur in der Schweißzone bei ca. 1200° C.

Ein weiterer großer Vorteil in Bezug auf geringe Kontakthärteverluste durch das Verfahren läßt sich durch den Einsatz eines Hartlotes als Zusatzwerkstoff erzielen. Ein solches Hartlot z.B. L Ag 15 P5 kann ebenfalls auf der Schweißseite der Kontakte durch Plattierung aufgebracht sein. Es besteht die Möglichkeit dieses Hartlot mit oder ohne Trägerwerkstoff zu verwenden, wobei die Reihenfolge der Werkstoffe im ersten Fall - Kontaktwerkstoff, Trägerwerkstoff, Hartlot - ist. Diese Ausgestaltung der Erfindung verringert die Kontakthärteverluste auf weniger als 15 %.

Die bei dieser Form des Verfahrens hergestellte Verbindung entspricht einer flußmittelfreien Hartlötung, deren Verfahrenstemperatur bei ca. 800° C liegt. Die hierbei entstehende Verbindungszone weist eine größere Festigkeit auf, als die der linienförmigen Verbindung bei der bloß der Trägerwerkstoff als Schweißhilfe eingesetzt wurde. Durch die charakteristischen Eigenschaften des Hartlotes ist zudem die Verbindungszone der Hartlötung großflächiger, da ein Hartlot während der Erhitzung und Verarbeitung eine flächig benetzende Wirkung hat.

Die niedrige Verfahrenstemperatur von ca. 800° C trägt mit dazu bei, daß die Verlustenergie, die durch Erwärmung von der Verbindungszone durch Wärmeleitung in die benachbarten Materialbereiche, insbesondere das Kontaktmaterial, abgeleitet wird, gering ist.

Anhand der Figuren 1, 2 und 3 wird im folgenden ein Ausführungsbeispiel beschrieben.

Die Figur 1  zeigt einen erfindungsgemäßen Kurzzeit-Energie-Impuls,

Die Figur 2  zeigt die Seitenansicht von Kontakt und Träger, sowie die feststehende Elektrode von unten und die bewegliche Elektrode von oben,

Die Figur 3  zeigt die Seitenansicht von Kontakt und Kontaktträger wobei der Kontakt eine Hartlotschicht besitzt, sowie die Aufsicht eines abgelängten Miniaturkontaktes in linien- oder bandförmiger Ausführung.

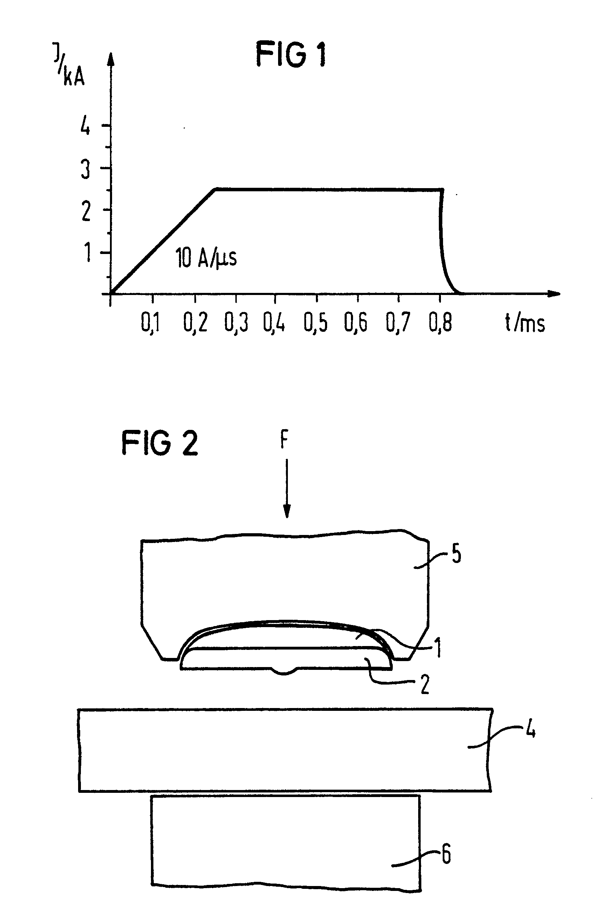

In der Figur 1 ist in charakteristischer Weise dargestellt, daß der geregelte Kurzzeit-Energieimpuls mit einer extremen Steilflankigkeit von 10 A/$\mu$s auf eine Stromstärke von z.B. 2,5 kA ansteigt.

Dieser Anlaufvorgang entspricht nicht einer Kondensatorentladung, denn der Kurzzeitschweißtakter, der hierfür verwendet wird, regelt über einen Soll-/Istwertvergleich den Strom, die Spannung oder die Leistung die wirklich an der Schweißstelle eingebracht wird, entsprechend einer vorher aufgestellten Sollwertkurve. Die Regelung umfaßt in diesem Fall den Anstieg des hier dargestellten Stromimpulses bis zu ca. 0,25 ms und den anschließend konstanten Verlauf bis zu 0,8 ms.

In der Figur 2 ist im Schnitt die Anordnung von Elektroden und zu verschweißenden Bauteilen kurz vor dem Schweißvorgang dargestellt. Direkt über der feststehenden Elektrode 6 befindet sich sich der Träger 4, auf den der Kontakt 1, bestehend aus seinem Kontaktmaterial und einem Trägerwerkstoff 2, unter der Schweißkraft F, die durch die bewegliche Elektrode 5, die den Kontakt entsprechend seiner Kontaktform großflächig umschließt, aufgebracht wird mittels eines Kurzzeit-Energieimpulses aufgeschweißt wird. Hierbei werden für die verschiedenen Elemente beispielsweise folgende Werkstoffe benutzt:

Für
- Elektrode 5, 6       CuCrZr
- Träger 4       CuSn4
- Trägerwerkstoff 2       CuNi 30 Fe
- Kontakt (-material) 1       Silber, oberflächengehärtet, mit Schutzvergoldung AuNi 5.

Der Kontakt 1 ist in diesem Fall aus dem Kontaktmaterial Silber und einem Trägerwerkstoff 2, bestehend aus einer Schweißhilfe aufgebaut, wobei der mittig zu erkennende Schweißbuckel zur Herstellung der Verbindung dient und der über die gesamte Breite des Kontaktes 1 unterlegte Trägerwerkstoff 2 einen großen Teil des Edelmetalles ersetzt. Die Schweißkraft F beträgt in diesem Fall 40 N und wird von der beweglichen Elektrode 5 aufgebracht.

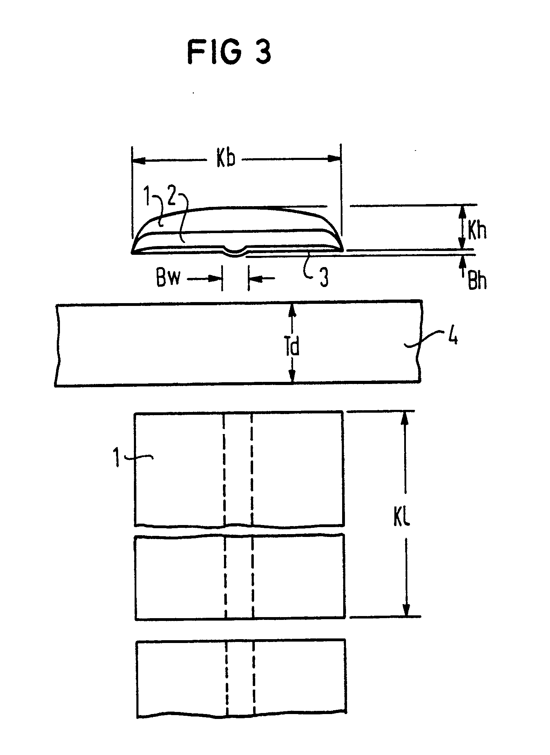

In Figur 3 ist ein Kontakt 1 mit einem Träger 4 und der Draufsicht auf den umgeklappten Kontakt 1 dargestellt. Die im Schnitt sichtbare Schichtung des Kontaktes besteht aus dem obenliegenden Kontaktmaterial, dem Trägerwerkstoff 2 und dem Hartlot 3. Zur Herstellung derartiger mehrschichtiger Kontakte, auch als Bi- oder Trimetallkontakte benannt, werden die entsprechenden Werkstoffe aufeinander plattiert. Die Dimensionierung sieht wie folgt aus:
Die Höhe Kh des Kontaktes beträgt ca. 0,15 mm, die Breite Kb ca. 0,8 mm, die Länge Kl z.B. 2 mm, die Höhe des Schweißbukkels Bh 0,02 mm und die Breite des Schweißbuckels Bb 0,1 mm. Der Träger 4 hat eine Dicke Td von ca. 0,25 mm. Der verwendete Werkstoff ist entsprechend dem Beispiel in Fig. 2 und als zusätzliches Hartlot wird z.B. L Ag 15 P5 eingesetzt. Mit einem derartigen Kontakt wird eine Hartlötung ohne Zusatz von Flußmitteln hergestellt, deren Verfahrenstemperatur bei ca. 800° C liegt. Auch Lote, wie z.B. L Ag 72 und L Ag 44 können als Hartlote eingesetzt werden. Die Ausbildung der Schweißwarze durch den Trägerwerkstoff 2, einer Schweißhilfe aus z.B. CuNi 30 Fe, ist in diesem Fall für die Verbindung ebenso notwendig, wie im Beispiel der Figur 2, wo kein Hartlot verwendet wird. Um die für die Verbindung notwendige Stromkonzentration an einer zentralen Stelle zu erreichen, kann die Schweißwarze nicht lediglich aus Hartlot bestehen, da unter der Schweißkraft eine Schweißwarze, die nur aus Hartlot besteht, schon bei geringen Temperaturen zusammengedrückt werden würde und keine weitere Temperaturerhöhung mehr zu erzielen wäre.

Bei der in Figur 3 gezeigten Art des Kontaktes 1 unter Verwendung eines Hartlotes 3 entsteht eine flußmittelfreie Hartlötung, wobei der Buckel aus Trägerwerkstoff seine Form behält und das Hartlot 3 durch seine benetzende Wirkung eine großflächige Verbindung erzeugt.

In diesem Fall beträgt die anfängliche Schweißspannung an den Elektroden 1,5 V. Ganz wesentliche Vorteile in diesem Verfahren sind neben dem äußerst geringen Kontakthärteverlusten vor allem auch die Reduzierung der Oberflächenbeschädigungen des Kontaktwerkstoffes, die Erhöhung der Festigkeit des Verbindungszone, eine Vergleichmäßigung in der Verbindungszone und eine Steigerung der Elektrodenstandmenge auf das drei- bis fünffache, sowie ein äußerst geringer Kupferübertrag von der Elektrode auf die Kontaktoberfläche, der an der Nachweisgrenze liegt.

## Patentansprüche

1. Verfahren zum Verbinden von Werkstücken durch Widerstandserwärmung mittels eines Kurzzeit-Energieimpulses, insbesondere beim Widerstandspunktschweißen und/oder beim Widerstandslöten eines Miniaturkontaktes (1) auf einen Träger (4), **dadurch gekennzeichnet,** daß der Kurzzeit-Energieimpuls geregelt ist, so daß er einen extrem steilflankigen Anstieg mit mindestens 10 A/µs, einen anschließend konstanten Verlauf mit hoher Stromstärke und eine maximale Zeitdauer von 0,8 ms aufweist und die ins Werkstück eingebrachte Leistung für aufeinanderfolgende Verbindungsvorgänge reproduzierbar eingebracht wird, wobei der für die Regelung notwendige Soll-/Ist-Wert-Vergleich anhand der direkt an den zu verbindenden Teilen anliegenden elektrischen Daten durchgeführt wird.

2. Verfahren nach Anspruch 1, **dadurch gekennzeichnet,** daß als Zusatzwerkstoff eine Schweißhilfe (2) eingesetzt wird.

3. Verfahren nach Anspruch 2, **dadurch gekennzeichnet,** daß die Verfahrenstemperatur bei ca. 1200° C liegt.

4. Verfahren nach einem der vorhergehenden Ansprüche, **dadurch gekennzeichnet,** daß als Zusatzwerkstoff ein Hartlot (3) eingesetzt wird.

5. Verfahren nach Anspruch 4, **dadurch gekennzeichnet,** daß eine flußmittelfreie Hartlötung durchgeführt wird.

6. Verfahren nach Anspruch 4 oder 5, **dadurch gekennzeichnet,** daß die Verfahrenstemperatur bei ca. 800° C liegt.

## Claims

1. Process for joining workpieces by resistance heating by means of a short-time energy pulse, preferably in the case of the resistance spot welding and/or in the case of the resistance soldering of a miniature contact (1) to a carrier (4), characterised in that the short-time energy pulse is regulated, so that it has an extremely steep-edged rise of at least 10 A/µs, a subsequently constant characteristic of high current intensity and a maximum duration of 0.8 ms, and the power introduced into the workpiece is introduced reproducibly for successive joining processes, the desired-value/actual-value comparison required for the regulation being carried out with reference to the electrical data applied directly at the parts to be joined.

2. Process according to Claim 1, characterised in that a welding aid (2) is used as added material.

3. Process according to Claim 2, characterised in that the process temperature is approximately 1200° C.

4. Process according to one of the preceding claims, characterised in that a hard solder (3) is used as added material.

5. Process according to Claim 4, characterised in that hard soldering without flux is carried out.

6. Process according to Claim 4 or 5, characterised in that the process temperature is approximately 800° C.

**Revendications**

1. Procédé pour réunir des pièces à traiter, au moyen d'un chauffage par résistance à l'aide d'une impulsion d'énergie de brève durée, notamment lors du soudage par points et/ou du brasage à résistance d'une pièce de contact miniature (1) sur un support (4), caractérisé par le fait que l'impulsion d'énergie de brève durée est réglée de manière à présenter une montée possédant un flanc extrêmement raide correspondant à au moins 10 A/µs, une allure ultérieure constante avec une intensité élevée de courant, et une durée maximale de 0,8 ms, et qu'on introduit de façon reproductible la puissance, qui est introduite dans la pièce à traiter, pour des opérations successives de liaison, la comparaison valeur de consigne/valeur réelle nécessaire pour la régulation étant exécutée sur la base des données électriques appliquées directement aux pièces à réunir.

2. Procédé suivant la revendication 1, caractérisé par le fait qu'on utilise comme matériau additionnel un matériau auxiliaire de soudage (2).

3. Procédé selon la revendication 2, caractérisé par le fait que la température mise en oeuvre pour le procédé est égale à environ 1200° C.

4. Procédé suivant l'une des revendications précédentes, caractérisé par le fait qu'on utilise comme matériau additionnel une brasure dure (3).

5. Procédé suivant la revendication 4, caractérisé par le fait qu'on réalise une brasure dure sans flux.

6. Procédé selon la revendication 4 ou 5, caractérisé en ce que la température mise en oeuvre pour le procédé est égale à environ 800° C.

## FIG 1

10 A/µs

## FIG 2

# FIG 3